# EUROPEAN PATENT APPLICATION

(11) **EP 3 917 114 A1**
(43) Date of publication of application: **01.12.2021**
(21) Application number: 20176737.3
(22) Date of filing: 27.05.2020
(51) Int. Cl.: H04L 29/08, H04L 29/06, H04L 12/66

(54) **METHOD, DEVICE AND SYSTEM FOR ESTABLISHING CONNECTIVITY BETWEEN INDUSTRIAL ENVIRONMENT AND COMPUTING PLATFORM**

(71) Applicant: Siemens Aktiengesellschaft, 80333 München (DE)
(72) Inventor: Milovanovic, Igor, 90491 Nürnberg (DE)

(57) **Abstract**

Method, Device and System for establishing connectivity between industrial environment and computing platform are disclosed. The device comprises an adaptor module (120) configured to simulate an interface of at least one of the industrial environment (140, 310) and the computing platform, wherein the adaptor module comprises: an encoder (122) configured to convert data packets associated with the industrial environment (140, 310) to a predefined format readable by the computing platform, wherein the data packets comprise a mixed dataset, wherein the computing platform (150, 340) is configured to read a dataset in the predefined format.

## Description

### Technical background

The present invention relates to establishing connectivity between industrial environment and computing platform. The present invention further relates to managing multiple computing platforms and the connectivity with the industrial environment.

### Background

Modern industrial applications, for example industrial automation or process control require the need of a combination of local and high-performance data-processing. For example, data analytics, scoring for machine learning algorithm or the like have to be performed. This data-processing may be performed with the benefits by remote servers of a cloud computing platform. To enable the data-processing, establishing connectivity between the industrial environment and the cloud computing platform may be required.

The connectivity may be established using a rich Industrial Internet of Things (IIOT) computing platform can gather the data from different industrial sources/data sources, for example from sensors, programming language controllers, supervisory control and data acquisition systems, manufacturing execution systems, enterprise resource planning systems etc. The rich industrial IIOT systems may recognize this the various data sources and provide a connectivity device and/or software to enable connectivity to the data sources.

The data received may be in the form of TimeSeries or events or data models describing the relationships of industrial assets and systems with TimeSeries, Events, Files and other industrial assets and systems.

However, the industrial environment may already be connected or may use a Simple Internet of Things (IOT) platform to enable standardization. Rewriting the connectivity of the industrial environment to use the Rich IIOT may be possible. However, this can become unfeasible as it requires changes in devices within the industrial environment. While the Simple IOT platform may enable standardization, it may not have intrinsic knowledge of the industrial environment. Further, the Simple IOT platform may recognize TimeSeries data only and provide TimeSeries connectors to the data sources using protocols like OPC/UA.

Connectivity between the Rich IIOT and the Simple IOT may be established using connectors that may need to be manually provided. Rewriting the connectivity of the industrial environment to use the Rich IIOT can become unfeasible as it requires changes in devices within the industrial environment. With large industrial ecosystems, the about methods to establish connectivity to the industrial environment can become unfeasible.

Therefore, the methods and devices to establish connectivity to the industrial environment may benefit from improvements.

The object of the present invention is to enable connectivity to the industrial environment irrespective of the type of computing platform without requiring rewriting of existing connections in the industrial environment. Further, the object of the present invention is to effectively process and analyse the data from the industrial environment.

An example embodiment of the present invention is a device for establishing connectivity between an industrial environment and a computing platform. The device comprising an adaptor module configured to simulate an interface of at least one of the industrial environment and the computing platform, wherein the adaptor module comprises an encoder configured to convert data packets associated with the industrial environment to a predefined format readable by the computing platform, wherein the data packets comprise a mixed dataset, wherein the computing platform is configured to read a dataset in the predefined format.

An example also includes a device for establishing connectivity between a computing platform and an industrial environment. The device comprising a communication module configured to publish the mixed dataset to an industrial computing platform of the industrial environment; and an adaptor module (220) configured to simulate an interface of at least one of the industrial environment and the computing platform, wherein the adaptor module comprises a decoder (222) configured to convert an encoded dataset as described in claim 3 to a mixed dataset comprising at least one of time series data, event data, files, and data models associated with the industrial environment.

Another example includes distributed computing system for establishing connectivity between an industrial environment and a computing platform. The system comprising the device disclosed herein implemented across one or more computing devices in the distributed computing system.

Yet another example includes a method for establishing connectivity between an industrial environment and a computing platform. The method comprising converting data packets associated with the industrial environment to a predefined format readable by the computing platform, wherein the data packets comprise a mixed dataset, wherein the computing platform is configured to read a dataset in the predefined format, wherein the mixed dataset comprises at least one of time series data, event data, files, and data models associated with the industrial environment; and establishing connectivity between the industrial environment and the computing platform by enabling transmission of the mixed dataset between the industrial environment and the computing platform.

A further example may include a non-transitory computer readable medium encoded with executable instructions (such as a software component on a storage device) that when executed, causes at least one processor to carry out this described method.

The present invention eliminates the need to rewrite the existing connectivity between the industrial environment, the computing platform and an industrial computing platform. Rewriting of existing connectivity is not necessary because the adapter for the computing platform can be deployed and configured. Further, the features of the present invention have the technical effect of simulating the computing platform and/ or the industrial environment using the adaptor module. The adaptor module uses the recognized protocol to generate an encoded dataset from the mixed dataset and further decode the encoded dataset to enable industry relevant processing of the mixed dataset.

Before describing the present invention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial environment" refers to a facility for manufacture, production that may be semi or completely automated. The industrial environment comprises a plurality of industrial devices, systems and Industrial Internet of Things (IIOT) also referred to as data sources/industrial assets. For example, data sources may be sensors, programming language controllers, supervisory control and data acquisition systems, manufacturing execution systems, enterprise resource planning systems etc. Example industrial environments include industrial automation environment, laboratory automation environment, building automation environment and the like. Further, according to the present invention, the industrial environment may be spread spatially and may include a combination of one or more industrial automation environments, laboratory automation environments, building automation environments.

As used herein "computing platform" refers to a Simple Internet of Things (IOT) platform configured to read dataset in the predefined format. Further, the computing platform may include a cloud computing platform with configurable computing physical and logical resources, for example, networks, servers, storage, applications, services, etc., and data distributed over the network, for example, the internet. Further, the computing platform may also include a Fog/edge computing platform. Fog/edge computing extends the cloud computing to the physical location of the devices belonging to the industrial environment. It may be combination of multiple edge devices that are configured to execute one or more operations of the computing platform.

As used herein "mixed dataset" refers to a combination of time series data including timestamp, variable name, variable value, quality code etc. or events including structured data (e.g. XML or JSON) describing events in the industrial environment or files such as images, documentation, etc. or data models describing the relationships of industrial assets and systems with time series data, Events, Files and other industrial assets and systems.

According to an embodiment of the present invention, encoder may be configured to read the time series data, event data, files, and data models in the mixed dataset and convert the mixed dataset to an encoded dataset in the predefined format recognized by the computing platform. In an embodiment, the encoded dataset is generated based on a binary format, 8-bit Unicode Transformation Format (UTF) and/or Base64 encoding format. For example, the encoder may be configured to encode the mixed dataset as base64 string and calculate the md5 hash of the string. In this example, the base64 string is the encoded dataset. Similar encoding is possible in any binary format and the 8-bit UTF.

Accordingly, the encoded dataset can be read by a simple IOT platform that uses standard protocols such as OPC Unified Architecture (OPC UA) and Message Queuing Telemetry Transport (MQTT). Therefore, the present invention advantageously avoids rewriting the connections between the data sources in the industrial environment and the computing platform.

According to an embodiment of the present invention, the device may include a south-bound interface configured to receive the mixed dataset; and a north-bound interface configured to publish the encoded dataset generated from the mixed dataset to a communication server of the computing platform. For example, the north bound interface may publish the encoded dataset as a series of strings to an OPC UA server where an edge device of the computing platform is subscribed. In an embodiment, in order to speed things up, the OPC UA server can be configured to use more than one OPC UA item for the publishing.

According to an embodiment of the present invention, the encoded dataset may be transmitted as a message with a header. The message may be transmitted based on the standard protocols recognized by the computing platform. In an embodiment, the header may include a timestamp, a source identifier, a message identifier, number of parts in the message and hash value of the message.

According to the present invention the decoder is configured to convert the encoded dataset the mixed dataset including time series data, event data, files, and data models associated with the industrial environment or a combination thereof. The decoder may be hosted on the cloud computing platform of the computing platform. The decoder receives the published encoded dataset and decodes it to the mixed dataset. Accordingly, the present invention ensures that effective data processing and analysis can be performed. By enabling access to the mixed dataset, deeper insights into operation of the industrial environment is possible.

The mixed dataset is published to an industrial computing platform to enable the deeper insights. The industrial computing platform is configured to parse the mixed dataset and store the time series data, the event data, the files, and the data models in associated datastore. For example, the associated datastore may include TimeSeries Storage, Event Storage, File Storage and Data Model Storage.

In an embodiment, the industrial computing platform may be part of the industrial environment. In another embodiment, the industrial computing platform may be a trusted computing platform associated with the industrial environment. As used herein the "industrial computing platform" refers to a computing platform that is configured to analyze the mixed dataset for improved operation of the industrial environment. The industrial computing platform comprises an industrial edge platform provided within the industrial environment and an industrial cloud platform hosted on a remote server. Accordingly, the industrial computing platform may advantageously include intrinsic knowledge of the industrial environment.

In an embodiment, industrial computing platform may be configured to provide predictive and prognostic analytics based on the mixed dataset. The richness of the mixed dataset is advantageously used by the industrial computing platform to harness the details within the mixed dataset. For example, the industrial computing platform may be configured to provide operational transparency in the industrial environment using digital twins. Further, advanced predictive analytics may be used to optimize maintenance and to predict and prevent unplanned industrial asset downtime.

The computing platform is communicatively coupled to the industrial computing platform using the device used to establish connectivity with the industrial platform. In an embodiment, the south interface and north interface is used to communicatively couple the industrial edge platform with the cloud computing platform. Accordingly, the present invention advantageously enables the context rich mixed data to be pre-processed by the industrial edge platform without degradation in the quality of the mixed dataset. Further, the encoder of the device enables communication of the mixed dataset on the computing platform without rewiring the connections and without causing degradation of the quality of the mixed dataset.

According to an embodiment of the present invention, the method includes encoding the mixed dataset to the encoded dataset to enable transmission of the mixed dataset via the computing platform. To perform the aforementioned steps, the method may include determining the predefined format supported by the computing platform and converting the mixed dataset into the encoded dataset based on the predefined format supported by the computing platform. The predefined format is based on at least one of a binary format, 8-bit Unicode Transformation Format (UTF) and Base64 encoding format. Therefore, the present invention is implementable in industrial environments with existing standard communication protocols.

The method may include further processing of the mixed dataset by the industrial computing platform. Accordingly, the method may include decoding the encoded dataset. In an embodiment, the mixed dataset is retrieved from the encoded dataset and is parsed. Based on the parsing, the method may include storing the time series data, the event data, the files, and the data models in the associated datastore.

The technical effect of the steps of the method is that an interface to either the industrial environment and/or the computing environment is simulated. In an embodiment, the method may include simulating the interface by converting the mixed dataset into the encoded dataset and by decoding the encoded dataset to the mixed dataset. The interface according the present invention is implemented by the device disclosed hereinabove. Therefore, the present invention advantageously eliminates the need to rewrite the existing connectivity between the industrial environment, the computing platform and an industrial computing platform.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a device for establishing connectivity between an industrial environment and a computing platform, according to an embodiment of the present invention;
- Fig. 2: illustrates a device for establishing connectivity between a computing platform and an industrial computing platform, according to an embodiment of the present invention;
- Fig. 3: illustrates a system for establishing connectivity between an industrial environment, a computing platform and an industrial computing platform, according to an embodiment of the present invention;
- Fig. 4: illustrates conversion of a mixed dataset to an encoded dataset, according to an embodiment of the present invention;
- Fig. 5: illustrates the encoded dataset, according to an embodiment of the present invention;
- Fig. 6: illustrates published encoded dataset, according to an embodiment of the present invention; and
- Fig. 7: illustrates a method for establishing connectivity between an industrial environment and a computing platform, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

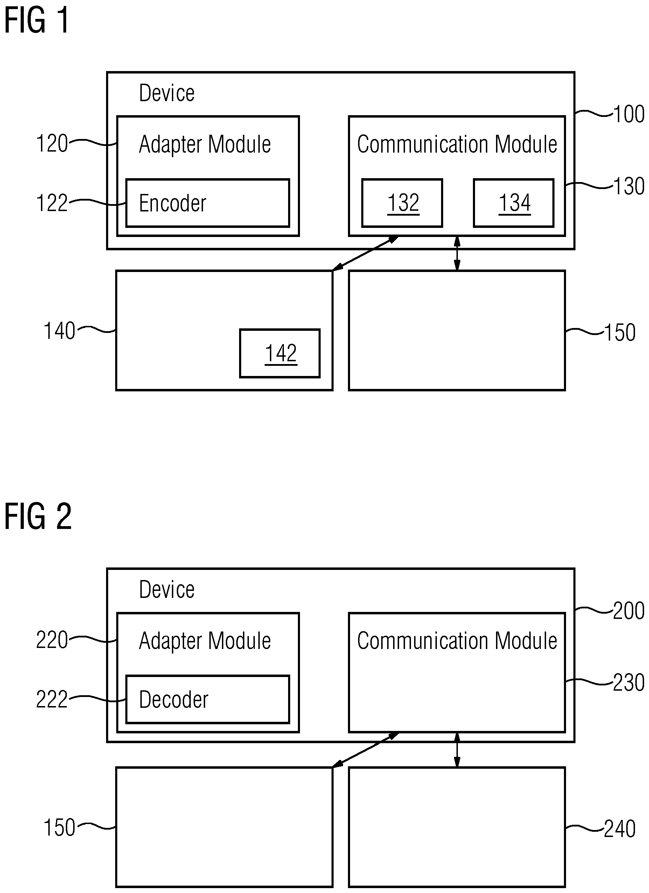

Fig. 1 illustrates a device 100 for establishing connectivity between an industrial environment 140 and a computing platform 150, according to an embodiment of the present invention. The figure illustrates that the device 100 is implemented separate from the industrial environment. However, the device 100 may also implemented using distributed computing devices with either the industrial environment 140 or the computing platform 150 or combination of both.

The computing platform 150 may include an edge computing platform and a cloud computing platform. The cloud computing platform with configurable computing physical and logical resources distributed over the cloud network. edge computing extends the cloud computing to the physical location of the devices belonging to the industrial environment. In an embodiment, the device 100 may be implemented on the edge computing platform.

The industrial environment 140 is a facility for manufacture, production that may be semi or completely automated. The industrial environment comprises a plurality of industrial devices, systems and Industrial Internet of Things (IIOT) also referred to as data sources/industrial assets 142. Example data sources 142 include sensors, programming language controllers, supervisory control and data acquisition systems, manufacturing execution systems, enterprise resource planning systems etc.

The data sources 142 generate a mixed dataset that represents operation of the industrial environment 140. The mixed dataset includes a combination of time series data including timestamp, variable name, variable value, quality code etc. or events including structured data (e.g. XML or JSON) describing events in the industrial environment or files such as images, documentation, etc. or data models describing the relationships of industrial assets and systems with time series data, Events and Files.

The device 100 includes an adaptor module 120 and a communication module 130. The communication module 130 includes a south-bound interface 132 and a north-bound interface 134. The south-bound interface 132 is configured to receive the mixed dataset from the data sources 142. The north-bound interface 134 is configured to establish communication with the computing platform 150. In an embodiment, the device 100 is implemented in the edge computing platform, accordingly, the north-bound interface 134 is configured to establish communication with the cloud computing platform.

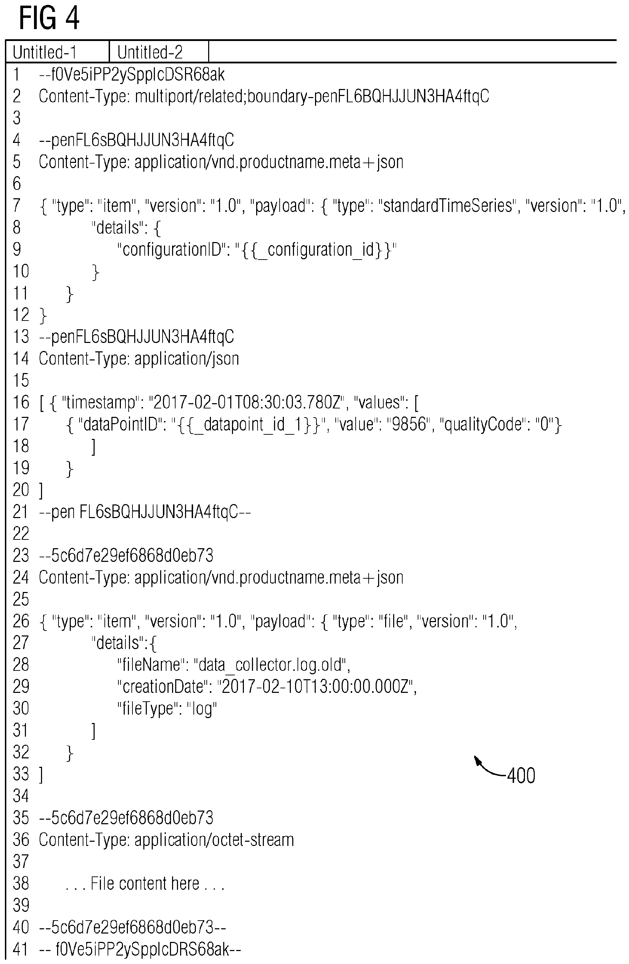

The adapter module 120 is configured to simulate the computing platform in the industrial environment. The adapter module 120 includes an encoder 122. In an embodiment, the adapter module 120 determines a predefined format of the data recognized by the computing platform. The predefined format is used by the encoder 122 to generate an encoded dataset from the mixed dataset. The encoded dataset is generated based on a binary format, 8-bit Unicode Transformation Format (UTF) and/or Base64 encoding format. For example, the encoder may be configured to encode the mixed dataset as base64 string and calculate the md5 hash of the string. In this example, the base64 string is the encoded dataset. Figs. 4-5 illustrate the generation of the encoded dataset.

Accordingly, the encoded dataset can be read by the computing platform 150 that uses standard protocols such as OPC Unified Architecture (OPC UA) and Message Queuing Telemetry Transport (MQTT). Therefore, the device 100 advantageously avoids rewriting the connections between the data sources 142 in the industrial environment 140 and the computing platform 150.

The north-bound interface 134 is configured to publish the encoded dataset generated from the mixed dataset to a communication server of the computing platform 150. For example, the north bound interface may publish the encoded dataset as a series of strings to an OPC UA server where the edge computing platform is subscribed.

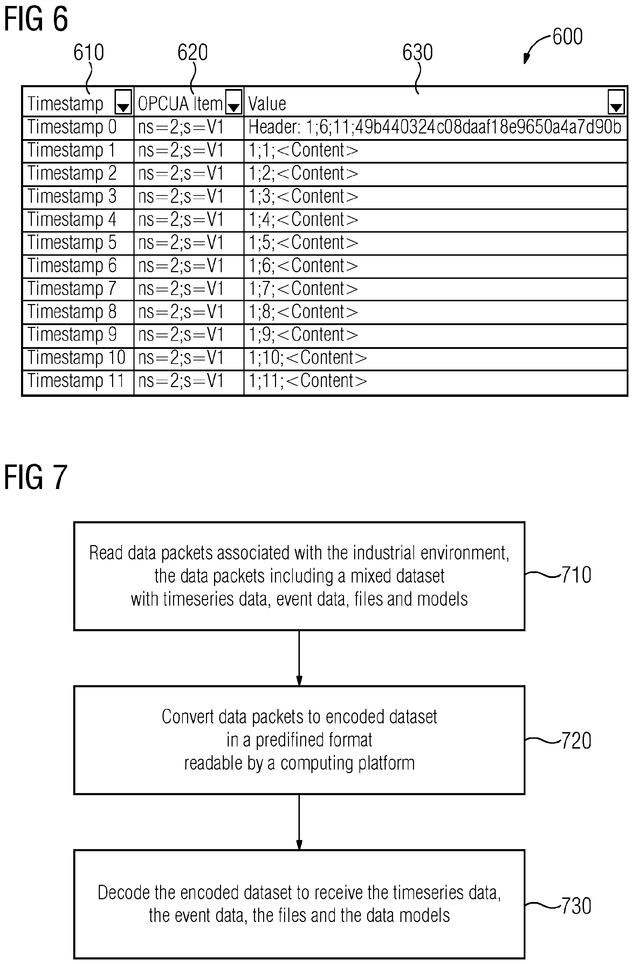

The encoded dataset may be transmitted as a message with a header. The message may be transmitted based on the standard protocols recognized by the computing platform 150. In an embodiment, the header may include a timestamp, a source identifier, a message identifier, number of parts in the message and hash value of the message. Fig. 6 described herein after illustrates the published encoded dataset according to an embodiment of the present invention. In an embodiment, the encoded dataset is published to a time series storage or a time series queue of the computing platform 150.

The device 100 works in conjunction with device in Fig. 2 to enable insightful processing of the encoded dataset. Fig. 2 illustrates a device 200 for establishing connectivity between the computing platform 150 and an industrial computing platform, according to an embodiment of the present invention.

The device 200 includes an adaptor module 220 with a decoder 222. Further, the device 200 includes a communication module 230 that is configured to enable the communication between the computing platform 150 and the industrial computing platform 240. In the present embodiment, the industrial computing platform 240 is an Industrial cloud platform hosted on a remote server or on a distributed computing setup. The industrial cloud computing platform advantageous uses intrinsic industry insights for effective processing of the mixed dataset from the industrial environment 140.

The decoder 222 is configured to convert the encoded dataset to the mixed dataset to enable its processing. The decoder 222 is configured to read the published encoded dataset from time series storage or time series queues of the computing platform 150. The decoder 222 is configured to construct the mixed dataset into one of time series data, event data, files, and/or data models associated with the industrial environment 140.

In an embodiment, the decoder 222 is configured to classify the encoded dataset received in time series based on the timestamp, the source identifier, the message identifier, number of parts in the message and hash value of the message. The decoder 222 may be configured to generate a classification model to classify the encoded datasets. In another embodiment, the classification model may be generated based on historical encoded datasets generated from historical operation data associated with the industrial environment 140.

The industrial cloud platform 240 may be used to effectively analyze the mixed dataset after it is decoded. In an embodiment, industrial cloud platform 240 may be configured to provide predictive and prognostic analytics based on the mixed dataset. The richness of the mixed dataset is advantageously used by the industrial cloud platform 240 to harness the details within. For example, the industrial cloud platform 240 may be configured to provide operational transparency in the industrial environment using digital twins.

The devices 100 and 200 achieve the objective of enable connectivity to the industrial environment irrespective of the type of computing platform without requiring rewriting of existing connections in the industrial environment. Further, the objective of effectively process and analyse the data from the industrial environment.

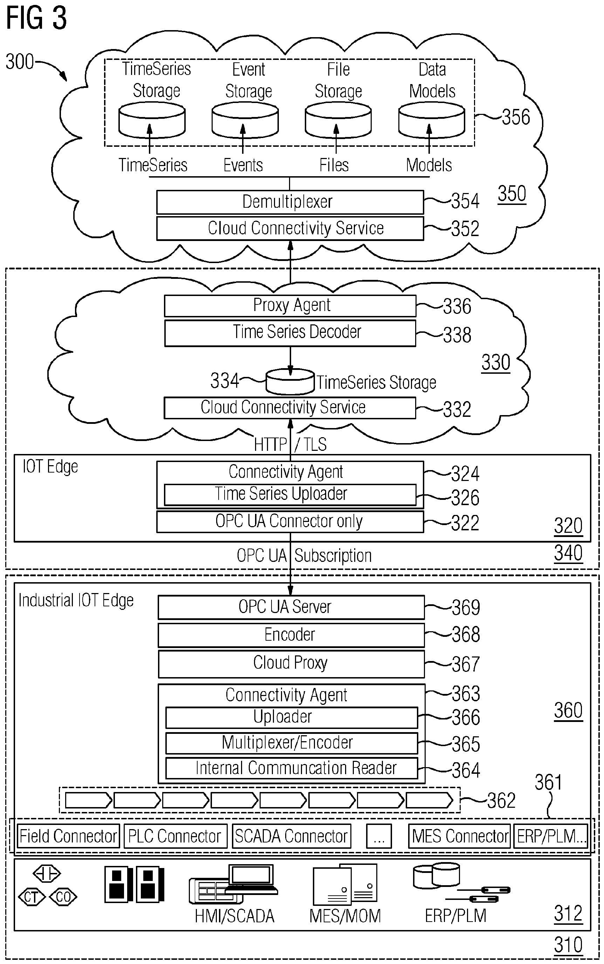

Fig. 3 illustrates a system 300 for establishing connectivity between an industrial environment 310, a computing platform 340 and an industrial computing platform 350, 314, according to an embodiment of the present invention.

The description of the Fig. 3 is from the perspective of three main systems (industrial environment 310, a computing platform 340 and an industrial computing platform 350, 314) interacting with each other. A person skilled in the art will recognize that the definition of the three systems is not limited. The constituent devices may be part of more than one system at the same time. Further, the devices 100 and 200 may be implemented across the systems. In addition, the protocols and devices disclosed in Fig. 3 is merely for example. The present invention is not limited to such examples.

The industrial environment 310 is an industrial manufacturing facility that includes multiple data sources 312. The data sources 312 include sensors S, controllers C, Human Machine Interfaces HMI, Supervisory Control and Data Acquisition systems SCADA, Manufacturing Execution Systems MES, Manufacturing Operations Management MOM, Enterprise Resource Planning ERP, Product Lifecycle Management systems PLM and the like. The data generated from the data sources may be in multiple types and forms such as time series data, event data, files, and data models. Accordingly, the data is referred to as a mixed dataset.

The industrial environment 310 in an embodiment further includes an industrial IOT edge platform 360. The IIOT edge platform 360 is part of the industrial computing platform. The IIOT edge platform 360 includes connectors 361 to the data sources 312. For example, the connectors include Field connector, Programmable Logic Controller (PLC) connector, SCADA connector, MES connector, PLM connector, etc. The connectors 361 establish connection between the respective data source 312 with the IIOT edge 360.

The IIOT edge platform 360 includes an internal bus 362 that is configured to enable communication within the IIOT edge platform 360. Further, the IIOT edge platform 360 includes a connectivity agent 363. The connectivity agent 363 includes an internal communication reader 364, a multiplexer/encoder 365 and an uploader 366.

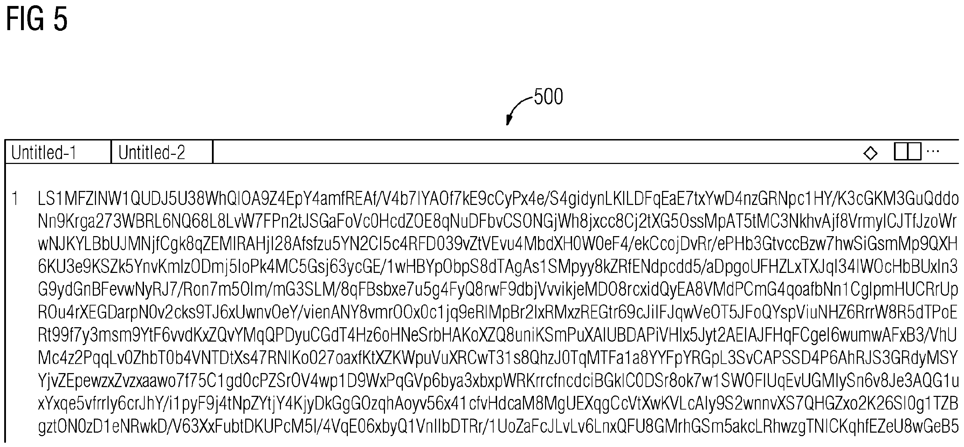

Furthermore, the IIOT edge platform 360 includes a cloud connectivity service proxy (referred hereinafter as cloud proxy) 367, an encoder 368 and a protocol server 369. The cloud proxy 367, the encoder 368 and the protocol server 369 are comparable to the device 100 in Fig. 1. Accordingly, the cloud proxy 367 is configured to simulate cloud connectivity service. The encoder 368 is configured to convert the mixed dataset to an encoded dataset in a predefined format. In the present embodiment, the predefined format is base64 timeseries format. The function of the encoder 368 is described in Figs. 4 and 5. The protocol server module 369 is configured to publish the encoded dataset to OPC/UA server. The encoded dataset is accompanied by MessageID, PartID, and Message Hash. In an embodiment, the systems such as MOM system, MES, SCADA system or ERP system may be configured to implement the cloud proxy 367, the encoder 368 and the protocol server module 369.

In addition to the deployment of the cloud proxy 367, the encoder 368 and the protocol server module 369. In an embodiment, the IIOT edge platform 360 may be configured to use a custom website address for execution of the cloud proxy 367, the encoder 368 and the protocol server module 369.

The IIOT edge platform 360 communicates with the computing platform 340 based on the OPC/UA subscription that is able to read the encoded dataset. The computing platform 340 includes an IOT edge platform 320 and a cloud platform 330. In an embodiment, the IOT edge platform 320 is part of the industrial environment 310. The IIOT edge platform 360 and the edge platform 320 may co-exist in the industrial environment 310 for the purpose of interoperability.

The IOT edge platform 320 includes and OPC/UA connector 322, a connectivity agent 324 and a timeseries uploader 326. The operation of the OPC/UA connector 322 and the connectivity agent 324. The IOT edge platform 320 can read data only in the predefined dataset, i.e. in TimeSeries and according to the OPC/UA data model. In an embodiment, the cloud proxy 367 may determine the predefined dataset that is read by the IOT edge platform 320 and accordingly the encoder 368 is configured to generate the encoded dataset.

The encoded dataset is accessible by the cloud platform 330 of the computing platform 340 via Hypertext Transfer Protocol (HTTP) or Transport Layer Security (TLS). The cloud platform 330 includes a cloud connectivity service 332 to enable communication between the cloud platform 330 and the edge platform 320. Further, the cloud platform 330 includes a TimeSeries storage 334 to store the encoded dataset received in time series format. The cloud platform 330 includes a decoder 336 to decode the encoded dataset as described in Fig. 2. In an embodiment, the decoder 336 is a Base64 string time series decoder that converts the encoded dataset to the mixed dataset. Furthermore, the cloud platform 330 may include a proxy agent 338 to enable communication with an industrial cloud platform 350.

The industrial cloud platform 350 includes a connectivity service 352 to enable connectivity to the cloud platform 330. Further, the industrial cloud platform 350 includes a demultiplexer that is configured to parse the mixed dataset to extract the multiple types of data therein. In addition, the separated data are stored in associated storages 356 such as Time Series storage, Event Storage, File Storage and Data model Storage.

In an embodiment, the mixed dataset may be transmitted to an analytics module to generate analytical insights into operation of the industrial environment 310. In another embodiment, the analytics module is configured to receive the parsed data from the associated storage 356.

Fig. 4 illustrates conversion of the mixed dataset to the encoded dataset, according to an embodiment of the present invention. As shown in Fig. 4, the mixed dataset is encoded as base64 string. Fig. 5 illustrates the encoded dataset, according to an embodiment of the present invention. Further, the MD5 hash is calculated. The MD5 hash is an alpha numerical string such as (49b440324c0a8daaf18e9650a4a7d90b). In an embodiment, the decoder 336 uses the MD5 hash to confirm the consistency of the encoded dataset.

Fig. 6 illustrates published encoded dataset 600, according to an embodiment of the present invention. The encoded dataset is published s a series of strings to the OPC/UA server where the IOT edge platform 320 is subscribed. The encoded dataset is published as a message with a header and message strings. The header published includes

```
<Timestamp><OPCUA Item><MessageId>;<Parts>;<Hash>
```

- TimeStamp (indicates increasing time)
- OPCUAItem (variable name for the simple iot edge device)
- MessageID: unique message id
- Parts: number of parts in the message
- Hash: MD5 hash of the message

The message is published to OPC/UA server as follows:

```
 <Timestamp><OPCUAItem><MessageId>; <Parts>; <Value>
```

As shown in Fig. 6, the timestamp 610 indicates the increase in time. The OPC/UA item 620 is the address to which the message is published. The Value 630 indicates the content of the published message 600.

Fig. 7 illustrates a method for establishing connectivity between an industrial environment and a computing platform, according to an embodiment of the present invention. The method begins at step 710 by receiving data packets from the industrial environment. The data packets may be generated as a mixed dataset including time series data, event data, files, and data models associated with the industrial environment.

The data packets may be received by the computing platform that is configured to read data only in a predefined format. The predefined format may be standard communication formats based on a binary format, 8-bit Unicode Transformation Format (UTF) and/or Base64 encoding format. Accordingly, step 710 may include determining the predefined format supported by the computing platform. Therefore, at step 710 consistency and interoperability is advantageously assured.

At step 720 includes converting the mixed dataset into an encoded dataset based on the predefined format supported by the computing platform. In an embodiment, the encoded dataset is published as a message to a communication server that is subscribed by the computing platform. Accordingly, step 720 includes generating and publishing the message. In an embodiment, the message includes a header and a message string. Further, at step 720 a hash value is calculated for the message. In addition, the published message includes a timestamp, an address of the communication server and the hash value.

Step 730 includes decoding the mixed dataset from the encoded dataset. Further, step 730 includes parsing the mixed dataset to enable extraction of the time series data, the event data, the files, and/or the data models. Furthermore, the time series data, the event data, the files, and the data models are stored in associated datastore.

Through the steps 710-730, the method enables simulation of an interface to either the industrial environment and/or the computing environment by converting the mixed dataset into the encoded dataset and by decoding the encoded dataset to the mixed dataset. Accordingly, the method establishes connectivity between the industrial environment and the computing platform by enabling transmission of the mixed dataset between the industrial environment and the computing platform. The method may include further processing of the mixed dataset by an industrial computing platform.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art. Additionally, while the current disclosure describes the configuration tool 110 as an independent component, the configuration tool may be a software component and may be realized within a distributed control system or an engineering software suite. Additionally, in an embodiment, one or more parts of the engineering module may be realized within the technical system.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to system/device claims.

## Claims

1. A device (100) for establishing connectivity between an industrial environment (140, 310) and a computing platform (150, 340), the device comprising:
an adaptor module (120) configured to simulate an interface of at least one of the industrial environment (140, 310) and the computing platform, wherein the adaptor module comprises:
an encoder (122) configured to convert data packets associated with the industrial environment (140, 310) to a predefined format readable by the computing platform, wherein the data packets comprise a mixed dataset, wherein the computing platform (150, 340) is configured to read a dataset in the predefined format.

2. The device (100) according to claim 1, wherein the mixed dataset comprises at least one of time series data, event data, files, and data models associated with the industrial environment.

3. The device (100) according to one of the preceding claims, wherein the encoder (122) is configured to read the time series data, event data, files, and data models in the mixed dataset and convert the mixed dataset to an encoded dataset in the predefined format, wherein the encoded dataset is generated based on at least one of a binary format, 8-bit Unicode Transformation Format (UTF) and Base64 encoding format.

4. The device (100) according to one of the preceding claims, further comprising:
a south-bound interface (132) configured to receive the mixed dataset; and
a north-bound interface (134) configured to publish the encoded dataset generated from the mixed dataset to a communication server subscribed by the computing platform (150, 340), wherein the encoded dataset is transmitted as a message (600) with a header.

5. The device according to one of the preceding claims, wherein the header comprises a timestamp, a source identifier, a message identifier, number of parts in the message and hash value of the message.

6. A device (200) for establishing connectivity between a computing platform (150, 340) and an industrial environment (240, 350), the device comprising:
an adaptor module (220) configured to simulate an interface of at least one of the industrial environment and the computing platform, wherein the adaptor module comprises:
a decoder (222) configured to convert an encoded dataset as described in claim 3 to a mixed dataset comprising at least one of time series data, event data, files, and data models associated with the industrial environment (140, 310); and
a communication module configured to publish the mixed dataset to an industrial computing platform (240, 350).

7. The device according to claim 6, wherein the industrial computing platform is configured to parse the mixed dataset and store the time series data, the event data, the files, and the data models in associated datastore.

8. A distributed computing system (300) for establishing connectivity between an industrial environment (310) and a computing platform (340), the system comprising:
a device (100, 200) according to claims 1 to 7 implemented across one or more computing devices in the distributed computing system.

9. The system according to claim 8, wherein the industrial environment (140, 310) comprises data sources (142, 312) that generate a mixed dataset comprising at least one of time series data, event data, files, and data models associated with the industrial environment (140, 310), wherein the data sources (142, 312) comprises at least one of field devices and industrial control systems and wherein an industrial computing platform is configured to receive and process the mixed dataset.

10. The system according to claim 9, wherein the industrial computing platform (240) comprises an industrial edge platform (360) provided within the industrial environment and an industrial cloud platform (350).

11. The system according to one of claims 8 to 10, wherein the computing platform is communicatively coupled to the industrial computing platform via the device according to claims 1 to 7.

12. A method for establishing connectivity between an industrial environment and a computing platform, the method comprising:
converting data packets associated with the industrial environment (140, 310) to a predefined format readable by the computing platform (150, 340), wherein the data packets comprise a mixed dataset,
wherein the computing platform (150, 340) is configured to read a dataset in the predefined format, wherein the mixed dataset comprises at least one of time series data, event data, files, and data models associated with the industrial environment; and
establishing connectivity between the industrial environment (140, 310) and the computing platform by enabling transmission of the mixed dataset between the industrial environment and the computing platform.

13. The method according to claim 12 further comprising:
determining the predefined format supported by the computing platform; and
converting the mixed dataset into an encoded dataset based on the predefined format supported by the computing platform, wherein the predefined format is based on at least one of a binary format, 8-bit Unicode Transformation Format (UTF) and Base64 encoding format.

14. The method according to one of claims 12 and 13 further comprising:
decoding the mixed dataset from the encoded dataset;
parsing the mixed dataset to enable extraction of at least one of the time series data, the event data, the files, and the data models; and
storing the time series data, the event data, the files, and the data models in associated datastore.

15. The method according to one of claims 12-14 further comprising:
simulating an interface to at least one of the industrial environment and the computing environment by converting the mixed dataset into the encoded dataset and by decoding the encoded dataset to the mixed dataset.

16. A computer program product, comprising computer readable code, that when executed on a processor, performs any one of the method steps of one or more of the method claims 12 to 15.

## Amended claims

### Amended claims in accordance with Rule 137(2) EPC.

1. A device (100) for establishing connectivity between an industrial environment (140, 310) and a computing platform (150, 340), the device comprising:
an adaptor module (120) configured to simulate an interface of at least one of the industrial environment (140, 310) and the computing platform, wherein the adaptor module comprises:
an encoder (122) configured to convert data packets associated with the industrial environment (140, 310) to a predefined format readable by the computing platform, wherein the data packets comprise a mixed dataset, wherein the mixed dataset comprises a combination of one or more of time series data, event data, files, and data models associated with the industrial environment, wherein the encoder (122) is configured to read the time series data, event data, files, and data models in the mixed dataset and convert the mixed dataset to an encoded dataset in the predefined format, wherein the encoded dataset is generated based on at least one of a binary format, 8-bit Unicode Transformation Format (UTF) and Base64 encoding format and whereby the computing platform (150, 340) is enabled to read a dataset in the predefined format.

2. The device (100) according to one of the preceding claims, further comprising:
a south-bound interface (132) configured to receive the mixed dataset; and
a north-bound interface (134) configured to publish the encoded dataset generated from the mixed dataset to a communication server subscribed by the computing platform (150, 340), wherein the encoded dataset is transmitted as a message (600) with a header.

3. The device according to one of the preceding claims, wherein the header comprises a timestamp, a source identifier, a message identifier, number of parts in the message and hash value of the message.

4. A device (200) for establishing connectivity between a computing platform (150, 340) and an industrial environment (240, 350), the device comprising:
an adaptor module (220) configured to simulate an interface of at least one of the industrial environment and the computing platform, wherein the adaptor module comprises:
a decoder (222) configured to convert an encoded dataset as described in claim 1 to a mixed dataset comprising a combination of one or more of time series data, event data, files, and data models associated with the industrial environment (140, 310); and
a communication module configured to publish the mixed dataset to an industrial computing platform (240, 350).

5. The device according to claim 4, wherein the industrial computing platform is configured to parse the mixed dataset and store the time series data, the event data, the files, and the data models in associated datastore.

6. A distributed computing system (300) for establishing connectivity between an industrial environment (310) and a computing platform (340), the system comprising:
a device (100, 200) according to claims 1 to 5 implemented across one or more computing devices in the distributed computing system.

7. The system according to claim 6, wherein the industrial environment (140, 310) comprises data sources (142, 312) that generate a mixed dataset comprising at least one of time series data, event data, files, and data models associated with the industrial environment (140, 310), wherein the data sources (142, 312) comprises at least one of field devices and industrial control systems and wherein an industrial computing platform is configured to receive and process the mixed dataset.

8. The system according to claim 7, wherein the industrial computing platform (240) comprises an industrial edge platform (360) provided within the industrial environment and an industrial cloud platform (350).

9. The system according to one of claims 7 to 8, wherein the computing platform is communicatively coupled to the industrial computing platform via the device according to claims 1 to 5.

10. A method for establishing connectivity between an industrial environment and a computing platform, the method comprising:
converting data packets associated with the industrial environment (140, 310) to a predefined format readable by the computing platform (150, 340), wherein the data packets comprise a mixed dataset, and wherein converting the data packets comprises converting the mixed dataset into an encoded dataset based on the predefined format supported by the computing platform, wherein the predefined format is based on at least one of a binary format, 8-bit Unicode Transformation Format (UTF) and Base64 encoding format wherein the computing platform (150, 340) is configured to read a dataset in the predefined format, wherein the mixed dataset comprises a combination of one or more of time series data, event data, files, and data models associated with the industrial environment; and
establishing connectivity between the industrial environment (140, 310) and the computing platform by enabling transmission of the mixed dataset between the industrial environment and the computing platform.

11. The method according to claim 10 further comprising:
determining the predefined format supported by the computing platform .

12. The method according to one of claims 10 and 11 further comprising:
decoding the mixed dataset from the encoded dataset;
parsing the mixed dataset to enable extraction of at least one of the time series data, the event data, the files, and the data models; and
storing the time series data, the event data, the files, and the data models in associated datastore.

13. The method according to one of claims 10-12 further comprising:
simulating an interface to at least one of the industrial environment and the computing environment by converting the mixed dataset into the encoded dataset and by decoding the encoded dataset to the mixed dataset.

14. A computer program product, comprising computer readable code, that when executed on a processor, performs any one of the method steps of one or more of the method claims 10 to 13.
